# EUROPÄISCHE PATENTANMELDUNG

(11) **EP 4 535 131 A1**
(43) Veröffentlichungstag der Anmeldung: **09.04.2025**
(21) Anmeldenummer: 24204198.6
(22) Anmeldetag: 02.10.2024
(51) Int. Cl.: G06F 3/01, G06F 3/03, G06Q 30/0251, G09G 5/14, G06V 40/10

(54) **VORRICHTUNG ZUR AUSWAHL EINES BILDES**

(30) Priorität: 05.10.2023 DE 202023105771 U
(71) Anmelder: advercharge GmbH, 57074 Siegen (DE)
(72) Erfinder: ZHOU, Xiang-Qian, 57074 Siegen (DE); GERHARDS, Christoph, 57074 Siegen (DE)
(74) Vertreter: Manitz Finsterwald Patent- und Rechtsanwaltspartnerschaft mbB

(57) **Zusammenfassung**

Die Erfindung betrifft eine Vorrichtung, insbesondere eine Ladevorrichtung bspw. zum Laden eines Elektrofahrzeugs, zur Auswahl eines Bildes. Die Vorrichtung umfasst eine Anzeigeeinheit, eine Aufnahmeeinheit, eine Bildverarbeitungseinheit und einen Controller. Die Anzeigeeinheit ist konfiguriert, um zumindest zwei Bilder anzuzeigen. Die Aufnahmeeinheit ist angeordnet und konfiguriert, um Daten in einem Blickfeld der Aufnahmeeinheit, insbesondere vor der Anzeigeeinheit zu erfassen. Die Bildverarbeitungseinheit ist konfiguriert, um die Daten der Aufnahmeeinheit zu empfangen und zumindest ein Merkmal basierend auf Veränderungen der Daten in dem Blickfeld der Aufnahmeeinheit zu bestimmen. Der Controller ist mit der Anzeigeeinheit, der Aufnahmeeinheit und der Bildverarbeitungseinheit verbunden und dazu konfiguriert, basierend auf dem zumindest einen Merkmal ein auf der Anzeigeeinheit angezeigtes Bild auszuwählen.

## Beschreibung

Die Erfindung betrifft eine Vorrichtung, insbesondere eine Ladevorrichtung bspw. zum Laden eines Elektrofahrzeugs, zur Auswahl eines Bildes.

In der modernen Kommunikationswelt der Informationstechnologie werden Displays oder Bildschirme zur Anzeige von Bildern verwendet. Displays oder Bildschirme werden dabei jedoch nicht nur für Computer verwendet, sondern auch für die Darstellung von Werbung in der Öffentlichkeit massenhaft eingesetzt. Beispielsweise wird Werbung auf Großbildschirmen an stark frequentierten Plätzen in Großstädten angezeigt.

Bisher wird Werbung über Displays oder Bildschirme den Zuschauern jedoch meistens durch eine reine Ausstrahlung der Werbung, also passiv, präsentiert. Durch die passive Ausstrahlung der Werbung kann keine Rückmeldung der Zuschauer auf die Werbung erfolgen und beispielsweise Werbeagenturen wissen nicht, wie die Zuschauer auf die Werbung reagieren.

Deshalb wird zunehmend auch interaktive Werbung eingesetzt, bei der eine Rückmeldung der Zuschauer auf die ihm präsentierte Werbung erfolgen kann. Somit kann beispielsweise eine Werbeagentur eine Reaktion eines Zuschauers auf die Werbung bewerten und so die Qualität der Werbung beurteilen. Auf Basis einer Bewertung der Wirkung von Werbung auf die entsprechenden Zuschauer kann eine gezielte, personalisierte Werbung an die Zuschauer selektiv ausgestrahlt werden.

Es stellt sich jedoch die Frage, wie eine Interaktion zwischen einem Zuschauer und einem Display oder einem Bildschirm ausgeführt werden soll?

Ein typische Methode ist die Benutzung einer Maus als Eingabegerät, wobei der Zuschauer oder ein Bediener der Maus mit den Augen auf die Stelle des Bildschirms blickt, die er interaktiv beispielsweise mit Hilfe der Maus auswählen will. Die Maus kann dabei mit der Hand des Benutzers bedient und an diese Stelle geführt werden. Die Auswahl eines Bildes kann durch eine Mausklick auf das Bild erfolgen.

Es gibt jedoch Szenarien, bei denen man die Auswahl einer Stelle auf dem Bildschirm oder eines auf dem Bildschirm angezeigten Bildes nicht durch ein Eingabegerät durchgeführt werden kann. Zum Beispiel bei einem Szenario bei dem ein Bildschirm an einer Straße zu Werbezwecken eingesetzt wird. Auch bei Bildschirmen an denen kein Eingabegerät angeschlossen ist kann die Auswahl eines Bildes oder einer Stelle auf dem Bildschirm nicht durch ein Eingabegerät wie beispielsweise einer Maus erfolgen.

Dies stellt einen der Gründe dar, warum viele Werbungen bisher dem Zuschauer nur passiv und nicht interaktiv präsentiert werden. Der Wandel von passiver Werbungen zu aktiver Werbung kann aber zu einer großen Effizienzsteigerung für beispielsweise die Werbebranche führen.

Es ist somit eine Aufgabe der Erfindung, eine Vorrichtung zur Auswahl eines Bildes auf einem Bildschirm anzugeben, ohne das ein Eingabegerät benötigt wird oder das ein Kontakt mit dem Bildschirm erfolgt.

Die Lösung dieser Aufgabe erfolgt durch eine Vorrichtung, insbesondere eine Ladevorrichtung bspw. eine Ladesäule zum Laden eines Elektrofahrzeugs mit den Merkmalen der unabhängigen Ansprüche.

Gemäß einem ersten Aspekt der Erfindung umfasst eine Vorrichtung, insbesondere eine Ladevorrichtung bspw. zum Laden eines Elektrofahrzeugs, wie ein LKW, PKW, Elektroroller, Elektrofahrrad, Elektroboot oder ähnliches, zur Auswahl eines Bildes eine Anzeigeeinheit, eine Aufnahmeeinheit, eine Bildverarbeitungseinheit und einen Controller. Die Anzeigeeinheit ist konfiguriert, um zumindest zwei Bilder anzuzeigen. Die Aufnahmeeinheit ist angeordnet und konfiguriert, um Daten in einem Blickfeld der Aufnahmeeinheit, insbesondere vor der Anzeigeeinheit zu erfassen. Die Bildverarbeitungseinheit ist konfiguriert, um die Daten der Aufnahmeeinheit zu empfangen und zumindest ein Merkmal basierend auf Veränderungen der Daten in dem Blickfeld der Aufnahmeeinheit zu bestimmen. Der Controller ist mit der Anzeigeeinheit, der Aufnahmeeinheit und der Bildverarbeitungseinheit verbunden und dazu konfiguriert, basierend auf dem zumindest einen Merkmal ein auf der Anzeigeeinheit angezeigtes Bild auszuwählen.

Vorzugsweise ist die Anzeigeeinheit konfiguriert, um Bilder oder Bildinformationen anzuzeigen, die Informationen aus dem Internet, Informationen aus einer App, Informationen von einem Speichermedium, Videos, Filme, Sportprogramme, Spielprogramme, Nachrichten und/oder Informationen über lokale Einrichtungen umfassen. Die Bilder oder Bildinformationen können eine Vielzahl an Informationen aus verschiedenen Datenquellen umfassen. Bevorzugt können die angezeigten Bilder oder Bildinformationen mit Hilfe des Controllers so ausgewählt oder bestimmt werden, dass die angezeigten Bilder oder Bildinformationen den Interessen des Benutzers entsprechen.

Die Vorrichtung kann insbesondere als Ladesäule ausgebildet sein. Die Anzeigeeinheit kann einen Bildschirm, ein Display oder ein Touch-Display umfassen. Die Aufnahmeeinheit kann zumindest eine Kamera umfassen. Das zumindest eine Merkmal kann insbesondere eine räumliche Orientierung eines Körperteils einer Person die sich vor der Anzeigeeinheit befindet umfassen. Vorteilhaft ist es, wenn die Person in Richtung bzw. direkt auf die Anzeigeeinheit blickt. Des zumindest eine Merkmal kann eine Orientierung des Kopfes der Person auf ein bestimmtes Bild, ein Nicken und/oder ein Schütteln des Kopfes der Person zu einem bestimmten Bild; eine Orientierung der Augen der Person auf ein bestimmtes Bild, ein Zudrücken zumindest eines Auges der Person zu einem bestimmten Bild und/oder eine Bewegung zumindest einer Hand der Person auf ein bestimmtes Bild umfassen.

Gemäß einer Ausführungsform ist die Anzeigeeinheit konfiguriert, die zumindest zwei Bilder nebeneinander anzuzeigen. Es können insbesondere mehr als zwei Bilder, beispielsweise drei, vier, fünf oder mehr als fünf Bilder gleichzeitig auf der Anzeigeeinheit angezeigt werden. Die zumindest zwei Bilder können auch übereinander oder in einer beliebigen Anordnung auf der Anzeigeeinheit dargestellt werden. Die zumindest zwei Bilder können auch überlappend auf der Anzeigeeinheit angezeigt werden.

Gemäß einer Ausführungsform ist die Anzeigeeinheit konfiguriert, die zumindest zwei Bilder in gleicher Größe nebeneinander anzuzeigen. Die zumindest zwei Bilder in gleicher Größe können eine gleich große Fläche auf der Anzeigeeinheit ausfüllen.

Gemäß einer weiteren Ausführungsform ist die Anzeigeeinheit konfiguriert, ein Bild größer als das andere Bild oder größer als weitere Bilder anzuzeigen. Das größer angezeigte Bild kann als Hauptbild bezeichnet werden. Das größer angezeigte Bild kann das von der Person ausgewählte Bild umfassen.

Vorzugsweise ist die Anzeigeeinheit konfiguriert, ein großes Bild neben einer Bildsequenz anzuzeigen, wobei die Bildsequenz eine Mehrzahl von kleinen Bildern umfasst, wobei jedes der kleinen Bilder kleiner als das große Bild ist. Die kleinen Bilder der Bildsequenz können beabstandet voneinander, angrenzend zueinander oder überlappend auf der Anzeigeeinheit angezeigt werden.

Bevorzugt ist die Anzeigeeinheit konfiguriert, um Bilder anzuzeigen, die eine Werbung, einen Film, mit oder ohne eine Werbung eingebettet in dem Film, ein Video, mit oder ohne eine Werbung eingebettet in dem Video, ein Sportprogramm, mit oder ohne eine Werbung eingebettet in dem Sportprogramm, ein Spielprogramm, mit oder ohne eine Werbung eingebettet in dem Spielprogramm, eine Fernsehsendung, mit oder ohne eine Werbung eingebettet in dem Fernsehprogramm, eine Nachricht, mit oder ohne eine Werbung eingebettet in der Nachricht, eine Internet-Seite, mit oder ohne eine Werbung eingebettet in der Internet-Seite, und/oder andere Bildinformationen, mit oder ohne eine Werbung eingebettet in den anderen Bildinformationen umfassen. Die Anzeigeeinheit kann auch dazu konfiguriert sein, um eine Sequenz von Bildern oder Multibilder anzuzeigen.

Die Werbung kann Informationen über Produkte und Dienstleistungen umfassen. Die Werbung kann darauf gerichtet sein, dem Benutzer der Vorrichtung oder des Ladesystems zu einem Kauf der auf der Anzeigeeinheit angezeigten Produkte oder Dienstleistungen zu bewegen. Vorteilhaft ist es, wenn die angezeigte Werbung den Interessen des Benutzers der Vorrichtung oder des Ladesystems entspricht.

Die Werbung kann auch als versteckte Werbung auf der Anzeigeeinheit angezeigt werden. Beispielsweise können die Informationen der beworbenen Produkte und/oder Dienstleistungen in einem Film eingebettet sein, wobei der auf der Anzeigeeinheit angezeigte Film den Interessen des Benutzers entsprechen kann. Alternativ dazu kann die Werbung auch in einem Video, einem Sportprogramm, einem Fernsehprogramm, einem Spielprogramm oder in eine Nachricht eingebettet sein, wobei die jeweiligen Programme, Videos oder Nachrichten den Interessen des

Benutzers entsprechen können. Der Benutzer kann folglich individuell auf Basis seiner Interessen durch Werbung angesprochen werden.

Gemäß einer Ausführungsform umfasst die Anzeigeeinheit einen Bildschirm. Der Bildschirm kann als eine elektronisch angesteuerte Anzeige zur Darstellung von veränderlichen Informationen, beispielsweise Bildinformationen oder Bilder ausgebildet sein. Vorzugsweise kann der Bildschirm als Berührungsbildschirm, auch Touchscreen, ausgebildet sein, wobei bei einer solchen Ausgestaltung der Bildschirm auch als Eingabegerät konfiguriert sein kann. Der Benutzer ist somit in der Lage, durch Berührung von Teilen des Bildschirms Befehle an den Controller zu übermitteln. Beispielsweise kann der Benutzer ein auf dem Bildschirm angezeigtes Bild durch Berührung des Bildschirms auswählen.

Gemäß einer Ausführungsform ist die Aufnahmeeinheit auf eine Umgebung, insbesondere auf ein Objekt vor der Anzeigeeinheit ausrichtbar. Die Aufnahmeeinheit kann derart ausgebildet sein, um manuell oder elektronisch auf einen Bereich vor der Vorrichtung oder dem Ladesystem ausrichtbar zu sein. Bei einer elektronischen Ausrichtung der Aufnahmeeinheit kann sich die Aufnahmeeinheit in Abhängigkeit eines erkannten Fahrzeugs, einer erkannten Person oder eines erkannten sonstigen Gegenstands selbstständig ausrichten, beispielsweise durch Fokussierung auf das erkannte Fahrzeug, auf die erkannte Person oder auf den erkannten sonstigen Gegenstand. Durch eine derartige Ausrichtung kann die Objekterkennung verbessert werden.

Bevorzugt umfasst die Aufnahmeeinheit eine Kamera. Die Kamera kann konfiguriert sein, um ein Bild der Umgebung der Vorrichtung oder des Ladesystems aufzuzeichnen. Die Kamera kann als RGB-Kamera ausgebildet sein, um Farbinformationen der Umgebung aufzuzeichnen. Bevorzugt kann die Kamera konfiguriert sein, um Bilder oder Videos mit einer hohen Auflösung aufzuzeichnen. Vorzugsweise umfasst die Aufnahmeeinheit zumindest zwei Kameras, besonders bevorzugt drei Kameras oder mehr als drei Kameras. Durch den Einsatz mehrerer Kameras kann das Blickfeld und somit ein durch die Kameras überwachter Bereich vor der Vorrichtung oder dem Ladesystem vergrößert werden.

Insbesondere kann die Aufnahmeeinheit an einem Rand der Anzeigeeinheit angeordnet sein. Die Aufnahmeeinheit kann bevorzugt an einem oberen Rand der Anzeigeeinheit angeordnet sein. Eine derartige Anordnung kann vorteilhaft sein, um einen Benutzer der sich vor der Vorrichtung oder dem Ladesystem befindet, beispielsweise vor der Anzeigeeinheit des Ladesystems, und das Ladesystem oder die Anzeigeeinheit bedient zu erfassen. Alternativ oder zusätzlich kann die Aufnahmeeinheit an einem seitlichen Rand oder an einem unteren Rand der Anzeigeeinheit angeordnet sein.

Gemäß einer Ausführungsform kann die Bildverarbeitungseinheit konfiguriert sein, das zumindest eine Objekt oder ein Merkmal des Objekts mittels einer Daten-Extraktionstechnik zu bestimmen und/oder mittels einer Hash-Funktion zu verschlüsseln. Das zumindest eine Objekt oder ein Merkmal des Objekts kann mittels der Hash-Funktion unkenntlich gemacht werden, beziehungsweise es kann mittels der Hash-Funktion verhindert werden, dass die Daten des Objekts oder Daten eines Merkmals des Objekts in Klartext lesbar sind. Die Hash-Funktion kann einen Algorithmus umfassen, der Daten eines erkannten Objekts in eine Zeichenfolge umwandelt. Die Zeichenfolge kann als Hashwert oder Hash bezeichnet werden, wobei der Hashwert eine definierte Länge aufweisen kann. Der Hashwert ist für jedes Objekt oder für jedes Merkmal eines Objekts eindeutig. Die eindeutigen Hashwerte können miteinander verglichen werden. Beispielsweise kann ein Kennzeichen als Merkmal eines Objekts in einen eindeutigen Hashwert mittels der Hash-Funktion umgewandelt bzw. verschlüsselt werden. Der eindeutige Hashwert kann für Menschen nicht auslesbar sein, jedoch kann der eindeutige Hashwert beispielsweise an verschiedenen Ladestationen mit anderen ermittelten Hashwerten verglichen werden.

Der Hashwert kann eine hexadezimale Zeichenkette umfassen. Daten-Extraktionstechniken können relevante Daten in den von der Aufnahmeeinheit aufgezeichneten Daten suchen und identifizieren. Daten-Extraktionstechniken können Kl-Methoden (Künstliche Intelligenz Methoden) umfassen. Insbesondere kann ein trainiertes neuronales Netz zur Datenerkennung verwendet werden. Das trainierte neuronale Netz oder ein anderes neuronales Netz kann auch zum Verschlüsseln (Hashen) der Daten oder des zumindest einen Merkmals genutzt werden.

Gemäß einer Ausführungsform ist die Bildverarbeitungseinheit konfiguriert, basierend auf den Daten zumindest einen Teil einer Person zu erkennen. Insbesondere kann der Teil der Person ein Körperteil der Person umfassen.

Bevorzugt umfasst der zumindest eine Teil der Person einen Kopf der Person und/oder zumindest ein Auge der Person und/oder zumindest eine Hand der Person. Der zumindest eine Teil kann auch zumindest einen Arm der Person, zumindest ein Bein der Person und/oder den Mund, insbesondere die Lippen der Person umfassen.

Insbesondere kann die Bildverarbeitungseinheit konfiguriert sein, das zumindest eine Merkmal als eine Orientierung des Kopfes auf eines der zumindest zwei Bilder, als eine Orientierung des zumindest einen Auges auf eines der zumindest zwei Bilder, als eine Bewegung der zumindest einen Hand auf eines der zumindest zwei Bilder, als ein Nicken des Kopfes zu einem der zumindest zwei Bilder, als ein Schütteln des Kopfes zu einem der zumindest zwei Bilder, und/oder als ein Zudrücken des zumindest einen Auges zu einem der zumindest zwei Bilder zu bestimmen.

Gemäß einer Ausführungsform ist die Bildverarbeitungseinheit konfiguriert, das zumindest eine Merkmal als eine zeitliche Reihenfolge der ausgewählten Bilder, als eine zeitliche Bewegung des zumindest einen Teils der Person, und/oder als zumindest ein zusätzliches Objekt in dem Blickfeld der Aufnahmeeinheit zu bestimmen. Das zumindest ein zusätzliches Objekt kann ein Fahrzeug, insbesondere eine Fahrzeug der Person, oder ein anderer Gegenstand umfassen.

Bevorzugt ist die Bildverarbeitungseinheit konfiguriert, eine Zuordnung der Person zu der Anzeigeeinheit zu bestimmen. Eine Zuordnung der Person zu der Anzeigeeinheit kann eine Identifizierung der Person umfassen. Durch die Zuordnung der Person kann eine Verbindung zwischen der Person und der Anzeigeeinheit, insbesondere eine Verbindung zwischen der Person und der Vorrichtung hergestellt werden.

Besonders bevorzugt ist die Bildverarbeitungseinheit konfiguriert, die Zuordnung der Person zu der Anzeigeeinheit mittels eines QR-Codes zu bestimmen. Alternativ oder zusätzlich kann beispielsweise ein Barcode oder biometrische Merkmale zur Zuordnung der Person zu der Anzeigeeinheit verwendet werden.

Gemäß einer Ausführungsform kann der Controller konfiguriert sein zu bestimmen, ob das zumindest eine Merkmal der Person und eine Sequenz von ausgewählten Bildern basierend auf dem zumindest einen Merkmal der Person mit zumindest einem Merkmal einer anderen Person und/oder mit einer Sequenz von ausgewählten Bildern basierend auf dem zumindest einen Merkmal der anderen Person übereinstimmt. Hierdurch können beispielsweise Ähnlichkeiten von Personen bestimmt werden.

Gemäß einer solchen Ausführungsform kann der Controller konfiguriert sein, der Person ähnliche Bilder oder gleiche Bilder auf der Anzeigeeinheit anzuzeigen, wie der anderen Person. Dies ist besonders vorteilhaft, um Personen mit ähnlichen Interessen mit ähnlichen Bildern, insbesondere mit ähnlicher Werbung, anzusprechen.

Gemäß einer weiteren Ausführungsform kann der Controller konfiguriert sein, das ausgewählte Bild zu markieren. Das ausgewählte, markierte Bild kann dadurch von anderen auf der Anzeigeeinheit angezeigten Bilder unterschieden werden.

Gemäß einer Ausführungsform kann die Anzeigeeinheit konfiguriert sein, eine Markierung um das ausgewählte Bild anzuzeigen. Durch die Markierung kann der Person kenntlich gemacht werden, welches Bild aktuell zu einer Auswahl vorgeschlagen wird.

Gemäß einer Ausführungsform kann der Controller konfiguriert sein, das ausgewählte Bild zu vergrößern. Die Vergrößerung kann unter Beibehaltung der Seitenverhältnisse des Bildes erfolgen. Die Vergrößerung des Bildes kann sich bis auf die maximale Ausdehnung der Anzeigeeinheit erstrecken.

Gemäß einer Ausführungsform kann die Anzeigeeinheit konfiguriert sein, das vergrößerte Bild anzuzeigen. Insbesondere kann das ausgewählte Bild nach der Auswahl des Bildes vergrößert auf der Anzeigeeinheit dargestellt werden. Das ausgewählte, vergrößert dargestellte Bild kann zusätzlich auch als kleineres Bild auf der Anzeigeeinheit dargestellt werden.

Gemäß einer Ausführungsform kann der Controller konfiguriert sein, das ausgewählte Bild zu verkleinern. Die Verkleinerung kann unter Beibehaltung der Seitenverhältnisse des Bildes erfolgen.

Gemäß einer Ausführungsform kann die Anzeigeeinheit konfiguriert sein, das verkleinerte Bild anzuzeigen. Insbesondere kann das verkleinerte Bild nach einer Ablehnung eines vorgeschlagenen oder ausgewählten Bildes verkleinert auf der Anzeigeeinheit dargestellt werden.

Gemäß einer Ausführungsform kann der Controller drahtlos oder drahtgebunden mit der Anzeigeeinheit, der Aufnahmeeinheit und der Bildverarbeitungseinheit verbunden sein.

Gemäß einer Ausführungsform kann der Controller konfiguriert sein, das zumindest eine Merkmal zu verschlüsseln. Eine Verschlüsselung des zumindest einen Merkmals kann vorteilhaft sein, um Datenschutzbestimmungen zu erfüllen.

Gemäß einer Ausführungsform kann der Controller konfiguriert sein, das zumindest eine Merkmal verschlüsselt zu speichern. Das zumindest eine Merkmal kann verschlüsselt in einer Datenbank abgespeichert werden. Das abgespeicherte Merkmal kann zur Bestimmung der angezeigten Bilder oder Bildinformationen verwendet werden.

Gemäß einer Ausführungsform kann die Vorrichtung ferner einen internen Speicher und/oder einen externen Speicher umfassen, wobei der Controller konfiguriert sein kann, das zumindest eine Merkmal in dem internen Speicher und/oder in dem externen Speicher zu speichern. Die Vorrichtung oder die Ladesäule, die zumindest ein Merkmal erfasst, kann das zumindest eine Merkmal lokal in dem internen Speicher der Vorrichtung oder der Ladesäule speichern. Dies kann eine Auswertung oder einen Vergleich mit anderen in dem internen Speicher der Vorrichtung abgespeicherten Merkmalen ermöglichen, ohne dass ein Datenaustausch mit anderen Vorrichtungen nötig ist. Vorteilhaft kann die Abspeicherung des zumindest einen Merkmals in dem externen Speicher sein, da hierdurch alle Merkmale zentral in einem Speicher verwaltet werden können.

Gemäß einer solchen Ausführungsform kann der Controller drahtlos oder drahtgebunden mit dem internen Speicher und/oder mit dem externen Speicher verbunden sein. Die drahtlose oder drahtgebundene Verbindung zwischen dem internen Speicher und/oder dem externen Speicher und dem Controller kann das Abspeichern und Abrufen von Objektdatensätzen durch den Controller ermöglichen.

Gemäß einer Ausführungsform kann der Controller konfiguriert sein, das zumindest eine Merkmal von dem internen Speicher und/oder von dem externer Speicher mittels einer Datenverbindung abzurufen.

Gemäß einer solchen Ausführungsform kann die Datenverbindung eine Funkverbindung, insbesondere eine Mobilfunkverbindung oder eine Kabelverbindung sein.

Vorzugsweise kann der externe Speicher ein Server oder ein Cloud-Server sein. Der Cloud-Server kann mit dem Internet verbunden sein.

Gemäß einer weiteren Ausführungsform kann die Vorrichtung eine Leuchteinheit umfassen, die konfiguriert ist, um einen Status des Vorrichtung anzuzeigen.

Die Leuchteinheit kann eine Vielzahl an Leuchtdioden umfassen.

Der Status der Vorrichtung kann beispielsweise einen betriebsbereiten Zustand der Ladesäule anzeigen. Ferner kann der Status eine Störung der Vorrichtung anzeigen, wobei eine Störung vorliegen kann, wenn die Vorrichtung nicht betriebsbereit ist. Der Status der Vorrichtung kann auch anzeigen, ob die Vorrichtung belegt ist, d.h. ob aktuell Elektrofahrzeuge an der Vorrichtung oder der Ladesäule geladen werden.

Vorzugsweise kann die Leuchteinheit als Lichtstreifen ausgebildet sein. Durch den Lichtstreifen kann der Status der Vorrichtung, insbesondere einer Ladesäule, für einen Benutzer der Ladesäule schon von Weitem erkennbar sein. Der Benutzer kann somit den Status der Ladesäule bereits erkennen selbst wenn sich der Benutzer noch nicht in unmittelbarer Umgebung, beispielsweise direkt vor der Ladesäule befindet.

Zudem kann der Lichtstreifen vorteilhaft sein, um eine Ladesäule insbesondere in der Nacht oder bei schlechten Witterungsverhältnissen zu finden bzw. zu erkennen.

Insbesondere kann die Leuchteinheit ausgebildet sein, um elektromagnetische Strahlung mit unterschiedlicher Wellenlänge zu emittieren. Das Emittieren bzw. Aussenden von elektromagnetischer Strahlung, insbesondere Licht, mit unterschiedlicher Wellenlänge, insbesondere farbiges Licht, kann vorteilhaft sein, um einem potentiellen Benutzer anzuzeigen in welchem Status sich die Vorrichtung bzw. die Ladesäule befindet. Beispielsweise kann das Aussenden von blauem Licht oder von rotem Licht dem Benutzer bereits bei einer Anfahrt an die Ladesäule kenntlich machen, dass die Ladesäule aktuell belegt ist (blaues Licht) oder einen Defekt aufweist (rotes Licht). Der Benutzer kann dann gleich zu einer anderen Ladesäule fahren, ohne erst an der belegten oder defekten Ladesäule anhalten und aussteigen zu müssen.

Bevorzugt kann die Leuchteinheit an einem oberen Rand und/oder einem unteren Rand der Vorrichtung, insbesondere an einer Ladesäule angeordnet sein.

Der untere Rand der Ladesäule ist durch den Bereich der Vorrichtung oder der Ladesäule bestimmt, auf dem die Ladesäule auf dem Boden steht. Der untere Rand der Ladesäule bildet dementsprechend einen unteren Abschluss der Ladesäule, der beispielsweise durch eine Kante zwischen Ladesäule und Boden bestimmt ist.

Der obere Rand der Ladesäule ist in vertikaler Richtung entgegengesetzt zu dem unteren Rand der Ladesäule angeordnet und bildet einen oberen Abschluss der Ladesäule. Die Anordnung des Lichtstreifens an dem oberen Rand und/oder an dem unteren Rand der Ladesäule kann zu einer verbesserten Anzeige des Status der Ladesäule führen.

Besonders bevorzugt kann die Leuchteinheit zumindest abschnittsweise umlaufend an der Vorrichtung, insbesondere an einer Ladesäule angeordnet sein. Die Leuchteinheit, insbesondere der Lichtstreifen kann mehrere, abschnittsweise unterbrochene Elemente umfassen.

Die Elemente können umlaufend an der Ladesäule angeordnet sein. Umlaufend bedeutet in diesem Zusammenhang, dass die Leuchteinheit bzw. die Elemente der Leuchteinheit auch an den seitlichen Rändern der Ladesäule angeordnet sein können.

Die Leuchteinheit kann auch in einer horizontalen Ebene parallel zum Boden umlaufend an der Ladesäule angeordnet sein, sodass die Leuchteinheit von allen Seiten sichtbar ist.

Gemäß einem weiteren Aspekt der Erfindung kann ein Netzwerk mehrere Vorrichtungen wie hierin beschrieben umfassen, wobei die Vorrichtungen an verschiedenen Standorten angeordnet sein können und mit einem Server oder Cloud-Server verbunden sein können.

Hierbei kann bspw. bei verschiedenen Ladevorgängen an verschiedenen Standorten ein und demselben Benutzer benutzerspezifisch und/oder standortspezifisch Information weitergegeben werden.

Gemäß einem weiteren Aspekt der Erfindung kann ein nichtflüchtiger Datenspeicher derart konfiguriert sein, um Anweisungen des Controllers für eine Steuerung einer hierin beschriebenen Vorrichtung zur Auswahl eines Bildes zu speichern.

Darüber hinaus kann der nichtflüchtige Datenspeicher konfiguriert sein, über eine Datenverbindung, beispielsweise eine Internetverbindung, zugänglich zu sein. Der nichtflüchtige Datenspeicher kann beispielsweise ein Online-Datenspeicher oder ein Cloud-Speicher sein.

Gemäß einem weiteren Aspekt der Erfindung kann ein Computersystem einen nichtflüchtigen Datenspeicher und die hierin beschriebene Vorrichtung zur Auswahl eines Bildes umfassen.

Die Erfindung wird nachfolgend anhand von Ausführungsbeispielen mit Bezug auf die Zeichnungen beschrieben.
- Fig. 1: zeigt eine schematische Frontansicht einer Vorrichtung, insbesondere einer Ladevorrichtung gemäß einer Ausführungsform;
- Fig. 2: zeigt eine schematische Frontansicht einer Vorrichtung, insbesondere einer Ladevorrichtung gemäß einer weiteren Ausführungsform;
- Fig. 3: zeigt eine schematische Seitenansicht der Ladevorrichtung aus Fig. 1 oder Fig. 2;
- Fig. 4A: zeigt eine schematische Anordnung einer Kamera an einer Anzeigeeinheit gemäß einer Ausführungsform;
- Fig. 4B: zeigt eine schematische Anordnung von zwei Kameras an einer Anzeigeeinheit gemäß einer weiteren Ausführungsform;
- Fig. 4C: zeigt eine schematische Anordnung von drei Kameras an einer Anzeigeeinheit gemäß einer weiteren Ausführungsform;
- Fig. 5A: zeigt eine schematische Darstellung einer Anordnung von Bildern, die auf der Anzeigeeinheit dargestellt werden gemäß einer Ausführungsform;
- Fig. 5B: zeigt eine schematische Darstellung einer Anordnung von Bildern, die auf der Anzeigeeinheit dargestellt werden gemäß einer weiteren Ausführungsform;
- Fig. 5C: zeigt eine schematische Darstellung einer Anordnung von Bildern, die auf der Anzeigeeinheit dargestellt werden gemäß einer weiteren Ausführungsform;
- Fig. 6: zeigt eine schematische Darstellung einer Vorrichtung, insbesondere einer Ladevorrichtung, gemäß einer Ausführungsform; und
- Fig. 7: zeigt eine schematische Darstellung eines Computersystems gemäß einer Ausführungsform.

Das Konzept der Auswahl eines Bildes kann bei beliebigen Bildschirmen oder Displays eingesetzt werden. Beispielsweise lässt sich das Konzept an Ladesäulen für Elektrofahrzeuge, die einen Bildschirm oder ein Display umfassen, nutzen.

Eine zunehmende Anzahl an Elektrofahrzeugen erfordert gleichermaßen eine zunehmende Anzahl an Möglichkeiten diese Elektrofahrzeuge zu laden. Dabei kann zwischen privater Infrastruktur und öffentlicher Infrastruktur unterschieden werden. Die private Infrastruktur beschränkt sich im Wesentlichen auf Lademöglichkeiten die von den Benutzern von Elektrofahrzeugen selbst installiert werden, beispielsweise in der heimischen Garage. Typischerweise umfassen die privaten Lademöglichkeiten Wallboxen mit einer Ladeleistung von beispielsweise 11 kW.

Die öffentliche Ladeinfrastruktur wird hingegen von Unternehmen (sogenannten CPOs), beispielsweise Stromanbietern oder Automobilherstellern, an öffentlich zugänglichen Stellen installiert und den Benutzern von Elektrofahrzeugen gegen Entgelt zur Verfügung gestellt. Die geometrischen Abmessungen einer Ladesäule der öffentlichen Infrastruktur sind systembedingt deutlich größer als leistungsärmere Ladevorrichtungen der privaten Infrastruktur. Nachfolgend werden Vorrichtungen, insbesondere Ladesäulen der öffentlichen Ladeinfrastruktur beschrieben. Typischerweise umfassen insbesondere Schnellladesäulen mit >22kW Ladeleistung eine Anzeigeeinheit, beispielsweise einen Bildschirm oder ein Display, auf dem einen Benutzer der Ladesäule Informationen über den Ladevorgang angezeigt werden können.

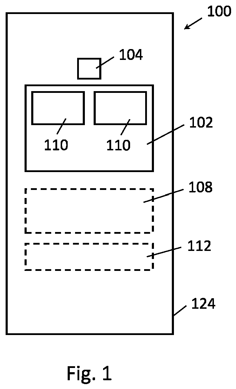

Fig. 1 zeigt eine schematische Frontansicht einer Vorrichtung 100, insbesondere eine Ladevorrichtung zum Laden eines Elektrofahrzeugs, zur Auswahl eines Bildes 110 gemäß einer Ausführungsform der Erfindung. Die Vorrichtung 100 umfasst eine Ladesäule 124, die mit Gleichstrom, DC-Strom, oder Wechselstrom, AC-Strom, betreibbar ist. Entsprechend ist die Ladesäule 124 konfiguriert, um Elektrofahrzeuge an der Ladesäule 124 mit Gleichstrom oder mit Wechselstrom zu laden.

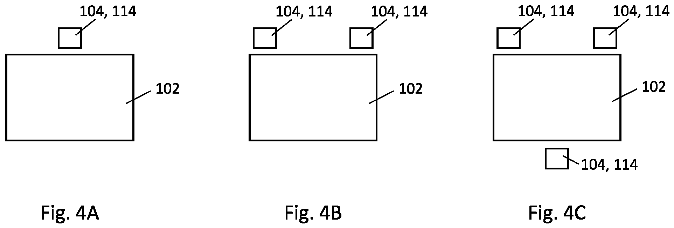

Die Vorrichtung 100 umfasst ferner eine Anzeigeeinheit 102, beispielsweise einen Bildschirm oder ein Display, die an der Ladesäule 124 angeschlossen und konfiguriert ist, um zumindest zwei Bilder 110 anzuzeigen. Die Bilder 110 oder Bildinformationen der Bilder 110 können insbesondere personalisierte Werbung umfassen. Weiterhin umfasst die Vorrichtung 100 eine Aufnahmeeinheit 104, die beispielsweise als Kamera 114 (siehe Figuren 4A bis 4C) ausgebildet sein kann. Die Vorrichtung 100 umfasst zusätzlich eine Bildverarbeitungseinheit 108 und einen Controller 112, wobei der Controller 112 mit der Anzeigeeinheit 102, der Aufnahmeeinheit 104 und der Bildverarbeitungseinheit 108 verbunden ist.

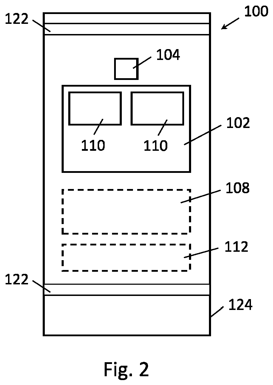

Fig. 2 zeigt eine weitere Ausführungsform der erfindungsgemäßen Vorrichtung 100 in schematischer Darstellung. Zusätzlich zu den bereits in Fig. 1 beschriebenen Komponenten, Ladesäule 124, Anzeigeeinheit 102, Aufnahmeeinheit 104, Bildverarbeitungseinheit 108 und Controller 110, umfasst die Vorrichtung 100 zumindest eine Leuchteinheit 122. Die Leuchteinheit 122 ist derart ausgebildet, dass die Leuchteinheit 122 elektromagnetische Strahlung mit unterschiedlicher Wellenlänge emittieren kann. Vorzugsweise ist die Leuchteinheit 122 als Lichtstreifen ausgebildet. Insbesondere kann die Leuchteinheit 122 derart konfiguriert sein, um einen Status der Ladesäule 124 farblich anzuzeigen.

Der Status der Ladesäule 124 kann beispielsweise angeben, ob die Ladesäule 124 betriebsbereit ist oder ob die Ladesäule 124 einen Fehler aufweist. Die Ladesäule 124 hat den Status "betriebsbereit", wenn an der Ladesäule 124 Elektrofahrzeuge geladen werden können.

Der Status "betriebsbereit" kann beispielsweise durch einen grün leuchtenden Lichtstreifen angezeigt werden.

Die Ladesäule 124 hat den Status "Fehler", wenn an der Ladesäule 124 nicht geladen werden kann, insbesondere wenn ein Elektrofahrzeug an der Ladesäule 124 nicht geladen werden kann.

Der Status "Fehler" kann beispielsweise durch einen rot leuchtenden Lichtstreifen angezeigt werden.

Ferner kann der Status der Ladesäule 124 anzeigen, dass aktuell an der Ladesäule 124 ein Elektrofahrzeug geladen wird. Der Status "belegt" kann beispielsweise mittels eines blau leuchtenden Lichtstreifens anzeigen, dass aktuell an der Ladesäule 124 ein Elektrofahrzeug geladen wird.

Die Leuchteinheit 122, insbesondere der Lichtstreifen, ist wie in Fig. 2 dargestellt, bevorzugt an einem oberen Rand und/oder an einem unteren Rand der Vorrichtung 100, insbesondere an einem oberen Rand und/oder an einem unteren Rand der Ladesäule 124, angeordnet.

Eine Anordnung des Lichtstreifens an dem oberen Rand der Ladesäule 124, beispielsweise oberhalb der Anzeigeeinheit 102, kann vorteilhaft sein, da der Lichtstreifen von Weitem für einen potentiellen Benutzer der Ladesäule 124 sichtbar ist.

Die Anordnung des Lichtstreifens an dem unteren Rand der Ladesäule 124 beispielsweise in einem Bereich unterhalb der Anzeigeeinheit 102, insbesondere in einem Bereich in Bodennähe, kann vorteilhaft sein, da das von dem Lichtstreifen emittierte Licht einen Bodenbereich um die Ladesäule 124 ausleuchten kann. Der Bodenbereich um die Ladesäule 124 kann das von der Leuchteinheit 122 ausgestrahlte Licht reflektieren und zur besseren Erkennbarkeit des Status der Ladesäule 124 beitragen.

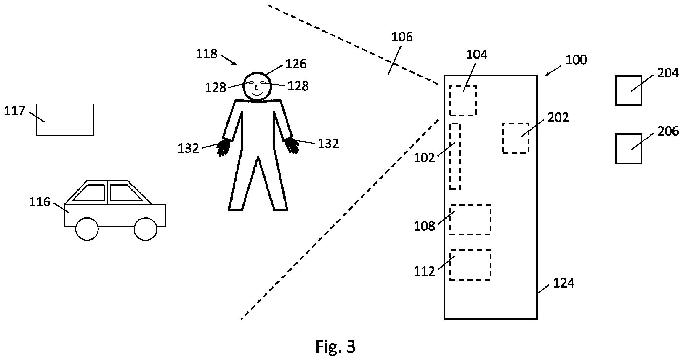

Fig. 3 zeigt eine schematische Seitenansicht der Ladevorrichtung aus Fig. 1 oder Fig. 2. Die Aufnahmeeinheit 104 ist oberhalb der Anzeigeeinheit 102 an der Ladesäule 124 angeordnet.

Die Aufnahmeeinheit 104 ist konfiguriert, um Daten in einem Blickfeld 106 der Aufnahmeeinheit 104, insbesondere vor der Anzeigeeinheit 102 zu erfassen. Die erfassten Daten können in einem internen Speicher 202 der Vorrichtung 100 oder in einem externen Speicher 204 abgespeichert werden.

Die Aufnahmeeinheit 104 kann zumindest eine Person 118 erfassen, die sich in dem Blickfeld 106 der Aufnahmeeinheit 104 befindet. Insbesondere können die von der Aufnahmeeinheit 104 erfassten Daten eine Person 118 oder zumindest Teile einer Person 118 umfassen. Die zumindest eine Person 118 kann insbesondere ein Benutzer der Ladesäule 124 sein. Der zumindest eine Teil der Person 118 kann einen Kopf 126 der Person 118 und/oder zumindest ein Auge 128 der Person 118 und/oder zumindest eine Hand 132 der Person 118 umfassen.

Die Aufnahmeeinheit 104 kann beweglich an der Ladesäule 124 angeordnet sein. Insbesondere kann die Aufnahmeeinheit 104 auf eine Umgebung vor der Anzeigeeinheit 102 ausrichtbar sein, sodass das Blickfeld 106 der Aufnahmeeinheit 104 Daten von Objekten 116, Gegenständen 117 oder von Personen 118, die sich vor der Anzeigeeinheit 102 befinden erfassen kann, wie in Fig. 3 dargestellt.

Die erfindungsgemäße Vorrichtung 100 ermöglicht eine Interaktionen zwischen der Anzeigeeinheit 102, wie beispielsweise einem Bildschirm oder ein Display, und der Person 118. Die Person 118 kann ein bestimmtes Bild 110 (in Fig. 3 nicht dargestellt) auf dem Bildschirm durch Kopf 126 und/oder Augen 128 und/oder Hand 132 beabstandet von der Vorrichtung 100 orten und auswählen, ohne einen direkten Kontakt zur Bildschirmoberfläche und ohne Benutzung eines Eingabegeräts wie beispielsweise einer Maus.

Durch die Erfassung der Person 118 oder Teile der Person 118 kann eine Zuordnung dieser Person 118 zu einem auf der Anzeigeeinheit 102 angezeigtem Bild 110 hergestellt werden. Die Aufnahmeeinheit 104, insbesondere eine Kamera, selektiert und nimmt die Person 118, insbesondere den Kopf 126 der Person 118 und/oder die Augen 128 der Person 118 und/oder zumindest eine Hand 132 der Person 118 auf und extrahiert durch die Bildverarbeitungseinheit 108 Merkmale (in anderen Worten: Label), insbesondere Merkmale für eine räumliche Orientierung der Person 118.

Die Merkmale können zumindest umfassen: eine Orientierung des Kopfes 126 der Person 118 auf ein bestimmtes, auf der Anzeigeeinheit 102 angezeigtes Bild 110; ein Nicken und/oder Schütteln des Kopfes 132 der Person 118 zu einem bestimmten, auf der Anzeigeeinheit 102 angezeigten Bild 110; eine Orientierung zumindest eines Auges 128 der Person 118 auf ein bestimmtes, auf der Anzeigeeinheit 102 angezeigtes Bild 110; ein Zudrücken zumindest eines Auges 128 der Person 118 zu einem bestimmten, auf der Anzeigeeinheit 102 angezeigten Bild 110 und/oder eine Bewegung zumindest einer Hand 132 der Person 118 auf ein bestimmtes, auf der Anzeigeeinheit 102 angezeigtes Bild 110. Die Merkmale können auch eine zeitliche Reihenfolge von ausgewählten Bilder 110 umfassen.

Die Merkmale können auch eine zeitliche Bewegung eines Körperteils der Person 118 oder ein zusätzliches Objekt 116 oder einen zusätzlichen Gegenstand 117 in Nähe der Person 118 im Blickfeld 106 der Aufnahmeeinheit 104 umfassen.

Das zusätzliche Objekt 116 kann ein Fahrzeug der Person 118 umfassen. Das Fahrzeuge kann insbesondere ein Elektrofahrzeug, wie beispielsweise ein batteriebetriebener Personenkraftwagen, ein batteriebetriebener Lastkraftwagen, ein batteriebetriebenes Fahrrad, oder ein batteriebetriebenes Elektroboot umfassen. Insbesondere kann das Merkmal ein Nummernschild des Fahrzeugs, ein Markenname des Fahrzeugs oder ein Fahrzeugtyp des Fahrzeugs umfassen.

Der Gegenstand 117 kann jeden beliebigen Gegenstand 117 umfassen, der zu einer Identifizierung der Person 118, insbesondere zu einer Identifizierung eines Benutzers der Ladesäule 124 geeignet ist.

Die Bildverarbeitungseinheit 108 kann konfiguriert sein, die Merkmale der Person 118, insbesondere eine Orientierung des Kopfes 126 der Person 118, und/oder eine Orientierung zumindest eines Auges 128 der Person 118 und/oder eine Orientierung zumindest einer Hand 132 der Person 118 aus den Daten zu extrahieren und nur diese extrahierten Merkmale als Zuordnung zu einem Bild 110 auf der Anzeigeeinheit 102 in einem internen Speicher 202 oder in einem externen Speicher 204 zu speichern, während die vollständigen Bildinformationen über die Person 118 nicht gespeichert werden.

Der Controller 112 realisiert die Zuordnung zwischen den auf der Anzeigeeinheit 102 angezeigten Bildern 110 und den Merkmalen der Person 118 oder den Merkmalen des zusätzlichen Objekts 116 oder Gegenstands 117. Die realisierte Zuordnung kann basierend auf der Erkennung eines Merkmals der Person 118 zu einer der folgenden Aktionen führen: ein auf der Anzeigeeinheit 102 angezeigtes Bild 110 wird ausgewählt oder selektiert; das zugeordnete Bild 110 wird auf dem ganzen Bildschirm projiziert und vergrößert dargestellt; oder ein vorheriger Zustand einer Anordnung der Bilder 110 auf der Anzeigeeinheit 102 wird wieder hergestellt.

Der Controller 112 ist mit allen Bauteilen, insbesondere mit der Anzeigeeinheit 102, der Aufnahmeeinheit 104, der Bildverarbeitungseinheit 108, dem internen Speicher 202 und dem externen Speicher 204 verbunden. Der Controller 112 ist konfiguriert, die Merkmale der Person 118 von der Bildverarbeitungseinheit 108 zu empfangen, und die Zuordnung zu einem auf der Anzeigeeinheit 102 angezeigtem Bild 110 basierend auf den Merkmalen der Person 118 zu bestimmen.

Ferner kann der Controller 112 konfiguriert sein, die Merkmale und das ausgewählte Bild 110 bzw. die Zuordnung zwischen dem Merkmal und dem ausgewählten Bild 110 in dem internen Speicher 202 und/oder dem externen Speicher 204 zu speichern. Der Controller 112 ist ferner konfiguriert, die Merkmale auch wieder von dem internen Speicher 202 und/oder dem externen Speicher 204 abzurufen und zu empfangen. Zusätzlich oder alternativ kann der Controller 112 dazu konfiguriert sein, die Merkmale im Internet zu speichern und von dort wieder abzurufen.

Der Controller 112 kann konfiguriert sein, durch die Labels oder Merkmale und/oder einer Sequenz von ausgewählten Bildern 110 zu bestimmen, dass die Person 118 mit einer Person 118 übereinstimmt, die von der Aufnahmeeinheit 104 dieser Vorrichtung 100 zu einem früheren Zeitpunkt aufgenommen und abgespeichert wurde. Diese Bestimmung kann durch einen Vergleich von abgespeicherten Merkmalen einer Person 118 oder einem Objekt 116 mit aktuell aufgezeichneten Merkmalen einer Person 118 oder eines Objekts 116 erfolgen, die sich gerade vor der Vorrichtung 100, insbesondere vor der Anzeigeeinheit 102 der Vorrichtung 100, befindet. Die abgespeicherten Merkmale können auch auf einem externen Speicher 204, beispielsweise einem Server 206, außerhalb der Vorrichtung 100 zu einem früheren Zeitpunkt aufgenommen und gespeichert worden sein.

Der Controller 112 kann desweitern konfiguriert sein, mittels Datensatz-Korrelation Personenprofile mit ähnlichen oder gleichen Merkmalen zu ermitteln. Basierend auf einer Übereinstimmung oder Ähnlichkeit von Personenprofilen können Bildinformationen oder Bilder 110 die Werbung umfassen für die Ausstrahlung auf der Anzeigeeinheit 102 bestimmt werden.

Das Auswahl eines Bildes 110 auf der Anzeigeeinheit 102 durch eine von der Anzeigeeinheit 102 entfernt befindlichen Person 118 kann umfassen, dass mindestens zwei Bilder 110 auf der Anzeigeeinheit 102, beispielsweise auf einem Bildschirm, ausgestrahlt oder angezeigt werden.

Es können die folgenden Schritte zur Zuordnung einer Person 118 zu einem bestimmten, auf der Anzeigeeinheit 102 dargestellten Bild 110, ausgeführt werden: Die Person 118 kann sich vor der Anzeigeeinheit 102 befinden und von der Anzeigeeinheit 102 beispielsweise durch einen QR-Code identifiziert werden. Der QR-Code kann sich auf einem Mobiltelefon der Person 118 befinden, wobei zur Identifizierung der Person 118 durch die Anzeigeeinheit 102 die Person 118 den QR-Code in das Blickfeld 106 der Aufnahmeeinheit 104 hält, sodass die Aufnahmeeinheit 104 den QR-Code erfassen kann. Durch das Zeigen des QR-Codes in Richtung der Aufnahmeeinheit 104 kann die Person 118 zu einer interaktiven Aktion mit der Anzeigeeinheit 102 bzw. dem Bildschirm lokalisiert werden.

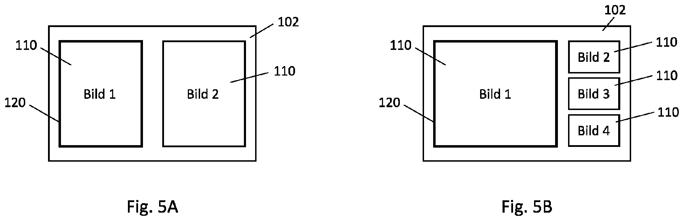

Im nächsten Schritt können mindestens zwei Bilder 110 auf dem Bildschirm projiziert/angezeigt werden. Der Bildschirm bzw. der Controller 112 schlägt der Person 118 ein erstes Bild 110 der zumindest zwei Bilder 110 vor, beispielsweise indem das erste Bild 110 markiert auf dem Bildschirm angezeigt wird. Die erste Zuordnung zwischen dem Kopf 126 der Person 118 und einem der Bilder 110 auf dem Bildschirm kann somit vordefiniert sein. Die Markierung 120 (siehe Fig. 5A bis 5C) kann eine farbige Umrandung des ersten Bildes 110 umfassen. Es sind jedoch auch andere Markierungen 120 denkbar, beispielsweise durch die Darstellung eines zusätzlichen Rahmens um das Bild 110. Das markierte Bild 110 wird der Person 118 auf dem Bildschirm angezeigt.

Der Bildschirm bzw. der Controller 112 kann eine Orientierung eines Körperteils wie beispielsweise des Kopfes 126 und/oder der Augen 128 und/oder zumindest einer Hand 132 der Person 118 berechnen und danach die Markierung des Bildes 110 als Zuordnung zu der Person 118 generieren und anzeigen.

Die Aufnahmeeinheit 104, insbesondere eine Kamera, beobachtet die Person 118 und bewertet, ob die Person 118 mit dieser vorgeschlagenen Zuordnung einverstanden ist. Die Bewertung kann umfassen, dass die Person 118 mit der Zuordnung, d.h. mit dem vorgeschlagenen, markierten Bild 110 einverstanden ist. Dies kann durch ein Zeichen von der Person 118, wie zum Beispiel durch ein Kopfnicken der Person 118 oder durch ein anderes Zeichen des Kopfes 126 der Person 118 und/oder durch ein Zeichen zumindest eines Auges 128 der Person 118 zur Bestätigung und/oder durch ein Zeichen zumindest einer Hand 132 der Person 118 erfolgen. Das Zeichen der Bestätigung kann zu einer Vergrößerung dieses Bildes 110 auf dem Bildschirm führen. Das bestätigte, vergrößert dargestellte Bild 110 kann als ein Hauptbild bezeichnet werden.

Macht die Person 118 ein anderes vereinbartes Zeichen wie zum Beispiel ein Kopfschütteln und/oder ein Zudrücken der Augen 128, so kann dies von dem Controller 112 der Vorrichtung 110 derart bewertet werden, dass die Person 118 mit der vorgeschlagenen Zuordnung nicht einverstanden ist.

Ist die Person 118 mit der Zuordnung nicht einverstanden, so wird das Bild 110 nicht ausgewählt. Die Kamera kann ein Wegbewegen und/oder eine Reorientierung des Kopfes 126 der Person 118 und/oder der Augen 128 der Person 118 und/oder zumindest einer Hand 132 der Person 118 zu einem nächsten Bild 110, beispielsweise das zweite auf der Anzeigeeinheit 102 angezeigte Bild 110, beobachten. Beispielsweise wenn sich der Kopf 126 der Person 118 in Richtung eines anderen Bildes 110, beispielsweise dem zweiten auf der Anzeigeeinheit 102 angezeigten Bild 110 bewegt, kann die Aufnahmeeinheit 104 eine räumliche Zuordnung des Kopfes 126 der Person 118 zu dem zweiten Bild 110 erkennen, sodass das zweite Bild 110 ausgewählt wird. Der Bildschirm oder der Controller 112 kann das zweite Bild 110 markieren und als neue Zuordnung vorschlagen.

Eine Bewertung, ob die Person 118 mit dieser neu vorgeschlagenen Zuordnung einverstanden ist, kann wie oben beschrieben erfolgen. Dieses Vorgehen kann so lange wiederholt werden, bis die Person 118 mit einer Zuordnung einverstanden ist und das ausgewählte Bild 110 kann auf dem Bildschirm vergrößert, ggf. auf dem ganzen Bildschirm, angezeigt werden.

Alternativ dazu kann die Zuordnung zwischen dem Kopf 126 der Person 118 und einem der Bilder 110 auf dem Bildschirm auch sofort dadurch festgelegt werden, dass die Orientierung des Kopfes 126 auf ein Bild 110 durch die Aufnahmeeinheit 104 räumlich festgestellt wird und das entsprechende Bild 110 sofort ausgewählt wird. Ein Vorschlag eines Bildes 110 durch den Bildschirm oder den Controller 112 erfolgt bei dieser Alternative nicht. Wenn jedoch der Kopf 126 der Person 118 in Richtung eines anderen Bildes 110 bewegt wird, erkennt die Aufnahmeeinheit 104 die räumliche Reorientierung des Kopfes 126 der Person 118, sodass das andere Bild 110 ausgewählt wird.

Fig. 4A bis 4C zeigen schematische Anordnungen der Aufnahmeeinheit 104, insbesondere schematische Anordnungen von Kameras 114 in einem Bereich um die Anzeigeeinheit 102. In einer Ausführungsform umfasst die Aufnahmeeinheit 104 eine Kamera 114, die mittig oberhalb der Anzeigeeinheit 102 angeordnet ist (Fig. 4A).

Fig. 4B zeigt eine alternative Ausführungsform in der die Aufnahmeeinheit 104 zwei Kameras 114 umfasst. Die zwei Kameras 114 sind horizontal beabstandet voneinander an einem oberen Rand der Anzeigeeinheit 102 angeordnet.

Eine weitere alternative Ausführungsform ist in Fig. 4C dargestellt, in der die Aufnahmeeinheit 104 drei Kameras 114 umfasst. In dieser Ausführungsform sind zwei Kameras 114 an dem oberen Rand der Anzeigeeinheit 102 horizontal beabstandet angeordnet, wie in der Ausführungsform aus Fig. 4B. Zusätzlich ist die dritte Kamera 114 mittig zentriert an einem unteren Rand der Anzeigeeinheit 102 angeordnet.

Es versteht sich, dass die Aufnahmeeinheit 104 auch mehr als drei Kameras 114 umfassen kann.

Die Kameras 114 können an beliebigen Stellen um die Anzeigeeinheit 102, insbesondere auch an den seitlichen Rändern der Anzeigeeinheit 102 (in den Fig. 4A - 4C nicht dargestellt) angeordnet sein. Insbesondere können die Kameras 114 an beliebigen Stellen an der Ladesäule 124 angeordnet sein, die es den Kameras 114 ermöglicht, einen Bereich vor der Ladesäule 124 zu erfassen.

Eine Mehrzahl von Kameras 114 kann vorteilhaft sein, um eine räumliche Orientierung zumindest eines Körperteils der Person 118 wie beispielsweise eine Orientierung des Kopfes 126 der Person 118, eine Orientierung der Augen 128 der Person 118 oder eine Orientierung der Hände 132 der Person 118 zu erkennen.

Fig. 5A zeigt eine schematische Darstellung einer Anordnung von Bildern 110, die auf der Anzeigeeinheit 102 dargestellt werden gemäß einer Ausführungsform. Die Anzeigeeinheit 102 ist konfiguriert, um zumindest zwei Bilder 110 (Bild 1, Bild 2) in gleicher Größe anzuzeigen. Insbesondere können auch mehr als zwei Bilder 110 gleichzeitig in gleicher Größe auf der Anzeigeeinheit 102 angezeigt werden. In der Ausführungsform in Fig. 5A werden zwei Bilder 110 auf der Anzeigeeinheit 102 dargestellt, wobei die Bilder 110 in gleicher Größe nebeneinander auf der Anzeigeeinheit 102 angezeigt werden. Eine vorgeschlagene Zuordnung eines Bildes 110 (Bild 1) zu einer Person 118 kann der Person 118 durch eine Markierung 120, beispielsweise durch einen Rahmen um das vorgeschlagenen Bild 110, kenntlich gemacht werden. Wird das vorgeschlagene, markierte Bild 110 (Bild 1) von der Person 118 bestätigt bzw. ausgewählt, kann dieses Bild 110 auf dem ganzen Bildschirm vergrößert und auf dem ganzen Bildschirm angezeigt werden.

Fig. 5B zeigt eine schematische Darstellung einer Anordnung von Bildern 110, die auf der Anzeigeeinheit 102 dargestellt werden gemäß einer weiteren Ausführungsform. Ein großes Bild 110 (Bild 1) wird neben mehreren kleineren Bildern 110 (Bild 2, Bild 3, Bild 4) auf der Anzeigeeinheit 102 dargestellt. Das größere Bild 110 weißt dabei eine größere Fläche auf als jedes der kleineren Bilder 110. Es versteht sich, dass die mehreren kleineren Bilder 110 von unterschiedlicher Größe sein können. Eine vorgeschlagene Zuordnung eines Bildes 110 (Bild 1) zu einer Person 118 kann der Person 118 durch eine Markierung 120, beispielsweise durch einen Rahmen um das vorgeschlagenen Bild 110, kenntlich gemacht werden. Das vorgeschlagene, markierte Bild 110 kann das große Bild 110 (Bild 1) umfassen.

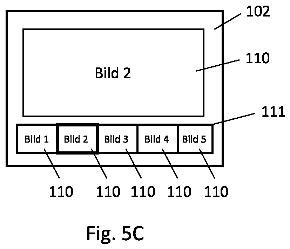

Fig. 5C zeigt eine schematische Darstellung einer Anordnung von Bildern 110, die auf der Anzeigeeinheit 102 dargestellt werden gemäß einer weiteren Ausführungsform. In dieser Ausführungsform wird ein großes Bild 110 (Bild 2) neben, insbesondere über einem Streifen von kleineren Bildern 110 oder über einer Bildsequenz 111 aus einer Vielzahl von Bildern 110 auf der Anzeigeeinheit 102 dargestellt. Die Bildsequenz 111 kann das groß dargestellte Bild 110 (Bild 2) als kleines Bild 110 umfassen. Eine vorgeschlagene Zuordnung eines Bildes 110 (Bild 2) zu einer Person 118 kann der Person 118 durch eine Markierung 120, beispielsweise durch einen Rahmen um das vorgeschlagenen Bild 110 in der Bildsequenz 111, kenntlich gemacht werden. Das vorgeschlagene und/oder von der Person 118 ausgewählte Bild 110 in der Bildsequenz 111 kann als großes Bild 110 (Bild 2) auf der Anzeigeeinheit 102 angezeigt werden.

In der in Fig. 5C dargestellten Ausführungsform kann eine Auswahl eines Bildes 110 wie folgt erfolgen. Eine erste initiale Zuordnung zwischen dem Kopf 126 der Person 118 und dem Bildschirm oder der Anzeigeeinheit 102 kann durch eine vordefinierte Zuordnung zwischen dem Kopf 126 der Person 118 und einem auf dem Bildschirm angezeigten Bild 110 (beispielsweise Bild 2) geschehen. Das so ausgewählte Bild 110 (Bild 2) kann durch eine erkenntliche Markierung 120 gekennzeichnet werden.

Will die Person eine anderes Bild 110 aus der Reihe der Kleinbilder bzw. aus der Bildsequenz 111 auswählen, so kann die Person 118 den Kopf 126 nach rechts oder links drehen und die Markierung 120 des Kleinbildes in der Bildsequenz 111 wechselt zu dem nächsten Kleinbild rechts oder links von dem ursprünglich markierten Kleinbild. Durch beispielsweise ein Nicken des Kopfes 126 der Person 118 kann dieses neu markierte Kleinbild zu dem Hauptbild werden und vergrößert über der Bildsequenz 111 auf der Anzeigeeinheit 102 dargestellt werden. Es können jedoch auch andere geeignete Gesten der Person 118 zu einer Bestätigung und damit zu einer Auswahl des Bildes 110 verwendet werden. Beispielsweise kann durch ein Zudrücken der Augen 128 der Person 118 oder durch einen Fingerzeig einer Hand 132 der Person 118 auf ein Bild 110 der Bildsequenz 111 eine Bestätigung und damit eine Auswahl des Bildes 110 erfolgen.

Die Auswahl eines Bildes 110 kann auch durch die Person 118 rückgängig gemacht werden. Beispielsweise kann durch ein Kopfschütteln signalisiert werden, dass die getroffenen Auswahl eines Bildes 110 rückgängig gemacht werden soll. Es können jedoch auch andere geeignete Gesten der Person 118 zum Widerrufen einer Bestätigung oder einer Auswahl des Bildes 110 verwendet werden. Beispielsweise kann durch ein zweimaliges Zudrücken der Augen 128 der Person 118 oder durch eine Wischbewegung einer Hand 132 der Person 118 ein Widerrufen der Bestätigung und damit der Auswahl des Bildes 110 erfolgen.

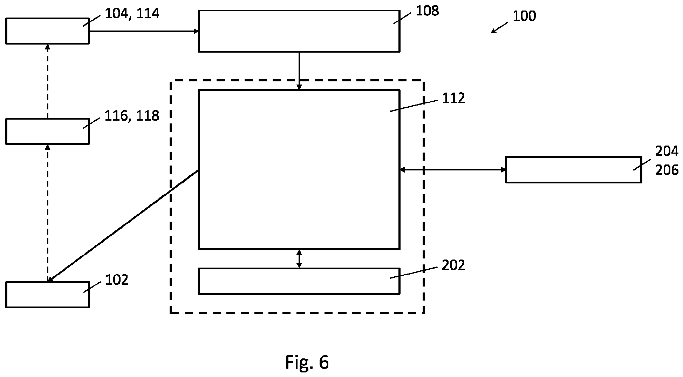

Fig. 6 zeigt eine schematische Darstellung einer Vorrichtung 100 zur Auswahl eines Bildes 110, insbesondere einer Ladevorrichtung, gemäß einer Ausführungsform. Die Aufnahmeeinheit 104 ist als Kamera 114 ausgebildet, welche konfiguriert ist Daten einer Person 118 oder eines Objekts 116 welches sich in einem Blickfeld 106 der Kamera 114 befindet zu erfassen. Die Daten können beispielsweise ein Bild der Person 118 oder des Objekts 116 oder ein Video der Person 118 oder des Objekts 116 umfassen. Die Kamera 114 kann oberhalb einer Anzeigeeinheit 102, beispielsweise ein Bildschirm, oder an einem Rand der Anzeigeeinheit 102 angeordnet sein.

Die Daten der Person 118 oder des Objekts 116 werden von der Kamera 114 an eine Bildverarbeitungseinheit 108 übermittelt. Die Bildverarbeitungseinheit 108 ist konfiguriert, um die Daten der Aufnahmeeinheit 104, insbesondere Daten die von der Kamera 114 erfasst wurden, zu empfangen und zumindest ein Merkmal der Person 118 oder des Objekts 116 basierend auf Veränderungen der Daten in dem Blickfeld 106 der Aufnahmeeinheit 104 zu bestimmen. Die Bildverarbeitungseinheit 108 kann Merkmale oder Label von Kopf 126, und/oder Augen 128 und/oder Hand 132 der Person 118 extrahieren. Insbesondere kann eine Orientierung des Kopfes 126 der Person 118 von der Bildverarbeitungseinheit 108 bestimmt werden, um eine Zuordnung zwischen der Person 118 und einem bestimmten Bild 110, welches auf der Anzeigeeinheit 102 angezeigt wird und welches die Person 118 adressieren oder auswählen will, herzustellen. Für die Auswahl des Bildes 110 wird folglich kein Eingabegerät oder beispielsweise ein Mauszeichen im Bildschirm verwendet.

Das zugeordnete Bild 110 kann markiert werden und der Person 118 gegenüber erkenntlich gemacht werden. Die Merkmale oder Label können gespeichert werden, während die durch die Kamera 114 aufgenommene Bildinformation aus Datenschutzgründen nicht gespeichert werden.

Das zumindest eine Merkmal der Person 118 oder des Objekts 116 kann insbesondere mit Hilfe von Daten-Extraktionstechniken bestimmt und mit Hilfe einer Hash-Funktion verschlüsselt werden. Insbesondere kann ein trainiertes neuronales Netz zur Erkennung der Person 118 oder des Objekts 116 verwendet werden. Das trainierte neuronale Netz oder ein anderes neuronales Netz kann auch zum Verschlüsseln (Hashen) der Daten der Person 118 oder der Daten des Objekts 116 oder des zumindest einen Merkmals der Person 118 oder des Objekts 116 genutzt werden.

Das zumindest eine Merkmal des Objekts 116 kann ein Nummernschild eines Fahrzeugs, ein Markenname eines Fahrzeugs, ein Fahrzeugtyp eines Fahrzeugs umfassen. Das zumindest eine Merkmal der Person 118 kann eine Orientierung des Kopfes 126 der Person 118 auf eines von zumindest zwei auf der Anzeigeeinheit 102 angezeigten Bilder 110, eine Orientierung zumindest eines Auges 128 der Person 118 auf eines der zumindest zwei auf der Anzeigeeinheit 102 angezeigten Bilder 110, eine Bewegung zumindest einer Hand 132 der Person 118 auf eines der zumindest zwei auf der Anzeigeeinheit 102 angezeigten Bilder 110, ein Nicken des Kopfes 126 der Person 118 zu einem der zumindest zwei auf der Anzeigeeinheit 102 angezeigten Bilder 110, ein Schütteln des Kopfes 126 der Person 118 zu einem der zumindest zwei auf der Anzeigeeinheit 102 angezeigten Bilder 110 und/oder als ein Zudrücken von zumindest einem Auge 128 der Person 118 zu einem der zumindest zwei auf der Anzeigeeinheit 102 angezeigten Bilder 110 umfassen.

Die von der Kamera 114 erfassten Daten oder die durch die Bildverarbeitungseinheit 108 verarbeiteten, ausgewerteten Daten können von der Bildverarbeitungseinheit 108 an ein Computersystem, insbesondere an einen Controller 112 des Computersystems weitergeleitet werden. Der Controller 112 kann konfiguriert sein, um zumindest einen Objektdatensatz basierend auf den Daten oder den Merkmalen zu bestimmen.

Der zumindest eine Objektdatensatz kann die Person 118 oder das Objekt 116, das zumindest eine Merkmal der Person 118 oder des Objekts 116, einen Standort der Vorrichtung 100, eine Zeitangabe, eine Wetterangabe, und/oder eine Temperaturangabe umfassen.

Der Controller 112 kann ferner dazu konfiguriert sein, den zumindest einen Objektdatensatz zu verschlüsseln und verschlüsselt in einem internen Speicher 202 der Vorrichtung 100, in einem externen Speicher 204 der Vorrichtung 100, in einem anderen externen Speicher (in Fig. 6 nicht dargestellt), und/oder in einem Netzwerkspeicher (in Fig. 6 nicht dargestellt) zu speichern und von dort wieder abzurufen. Der externe Speicher 204 kann bspw. einen Server 206 oder einen Cloud-Server umfassen.

Der Controller 112 kann ferner dazu konfiguriert sein, basierend auf dem Objektdatensatz oder basierend auf dem zumindest einem Merkmal der Person 118 und/oder des Objekts 116 ein auf der Anzeigeeinheit 102 angezeigtes Bild 110 auszuwählen.

Der Controller 112 kann auch konfiguriert sein, um zu bestimmen, ob das zumindest eine Merkmal der Person 118 und/oder des Objekts 116 mit einem anderen, abgespeicherten Merkmal einer Person 118 und/oder eines Objekts 116 übereinstimmt. Basierend auf dem Vergleich kann der Controller 112 konfiguriert sein zu bestimmen, welche Bilder 110 oder Bildinformationen auf der Anzeigeeinheit 102 angezeigt werden sollen.

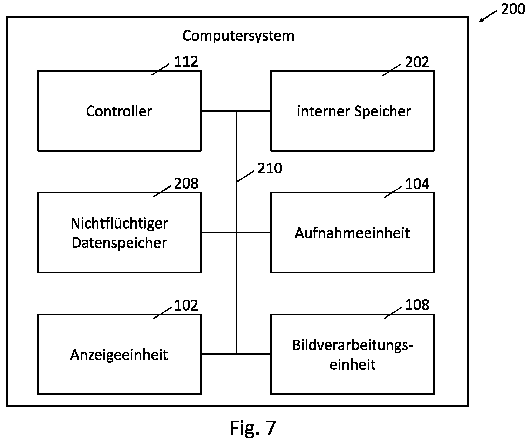

Fig. 7 zeigt eine schematische Darstellung eines Computersystems 200 gemäß einer Ausführungsform der Erfindung. Das Computersystem 200 kann einen Controller 112, einen internen Speicher 202 und einen nichtflüchtigen Datenspeicher 208 umfassen. Ferner kann das Computersystem eine Aufnahmeeinheit 104, eine Anzeigeeinheit 102 und eine Bildverarbeitungseinheit 108 umfassen.

Der Controller 112 kann Anweisungen ausführen, die im internen Speicher 202 bereitgestellt werden. Der nichtflüchtige Datenspeicher 208 kann ein Computerprogramm speichern, einschließlich der Anweisungen, die an den internen Speicher 202 übertragen und dann von dem Controller 112 ausgeführt werden können.

Der Controller 112, der interne Speicher 202 und der nichtflüchtige Datenspeicher 208 können miteinander verbunden sein, beispielsweise über eine elektrische Verbindung 210, wie z.B. über ein Kabel oder einen Computerbus oder über eine andere geeignete elektrische Verbindung 210 zum Austausch elektrischer Signale.

Der Controller 112, der interne Speicher 202 und der nichtflüchtige Datenspeicher 208 können auch drahtlos miteinander verbunden sein. Die drahtlose Verbindung kann insbesondere eine Funkverbindung sein. Die Anzeigeeinheit 102, die Aufnahmeeinheit 104 und die Bildverarbeitungseinheit 108 können mit dem Computersystem 200 verbunden sein, oder können Teile des Computersystems 200 sein. Die Anzeigeeinheit 102, die Aufnahmeeinheit 104 und die Bildverarbeitungseinheit 108 können intern mit dem Computersystem 200 über die elektrische Verbindung 210 verbunden sein.

Es versteht sich, dass das, was für die oben genannte Vorrichtung 100 beschrieben wurde, analog auch für das Computersystem 200 gelten kann.

Die erfindungsgemäße Vorrichtung 100 ermöglicht eine Auswahl oder Selektion eines Bildes 110 auf einer Anzeigeeinheit 102, wie beispielsweise einem Bildschirm, ein Display oder ein Touch-Display durch eine von der Anzeigeeinheit 102 entfernt positionierte Person 118, ohne die Benutzung eines Eingabegeräts wie beispielsweise einer Maus. Dies kann durch ein von der Anzeigeeinheit 102 entferntes menschliches Körperverhalten geschehen, insbesondere durch eine Bewegung des Kopfes 126, der Augen 128 und/oder der Hände 132 der Person 118.

### Bezugszeichenliste

- 100: Vorrichtung
- 102: Anzeigeeinheit
- 104: Aufnahmeeinheit
- 106: Blickfeld
- 108: Bildverarbeitungseinheit
- 110: Bild
- 111: Bildsequenz
- 112: Controller
- 114: Kamera
- 116: Objekt
- 117: Gegenstand
- 118: Person
- 120: Markierung
- 122: Leuchteinheit
- 124: Ladesäule
- 126: Kopf
- 128: Auge
- 132: Hand

- 200: Computersystem
- 202: interner Speicher
- 204: externer Speicher
- 206: Server
- 208: nichtflüchtiger Datenspeicher
- 210: elektrische Verbindung

## Patentansprüche

1. Vorrichtung (100), insbesondere eine Ladevorrichtung zum Laden eines Elektrofahrzeugs, zur Auswahl eines Bildes (110), umfassend:
eine Anzeigeeinheit (102), konfiguriert, um zumindest zwei Bilder (110) anzuzeigen;
eine Aufnahmeeinheit (104), angeordnet und konfiguriert, um Daten in einem Blickfeld (106) der Aufnahmeeinheit (104), insbesondere vor der Anzeigeeinheit (102) zu erfassen;
eine Bildverarbeitungseinheit (108), konfiguriert um die Daten der Aufnahmeeinheit (104) zu empfangen und zumindest ein Merkmal basierend auf Veränderungen der Daten in dem Blickfeld (106) der Aufnahmeeinheit (104) zu bestimmen;
einen Controller (112), der mit der Anzeigeeinheit (102), der Aufnahmeeinheit (104) und der Bildverarbeitungseinheit (108) verbunden und dazu konfiguriert ist basierend auf dem zumindest einen Merkmal ein auf der Anzeigeeinheit (102) angezeigtes Bild (110) auszuwählen.

2. Vorrichtung (100) nach Anspruch 1,
wobei die Anzeigeeinheit (102) konfiguriert ist, die zumindest zwei Bilder (110) nebeneinander anzuzeigen, und/oder
wobei die Anzeigeeinheit (102) konfiguriert ist, die zumindest zwei Bilder (110) in gleicher Größe nebeneinander anzuzeigen, und/oder wobei die Anzeigeeinheit (102) konfiguriert ist, ein Bild (110) größer als das andere Bild (110) oder größer als weitere Bilder (110) anzuzeigen, und/oder wobei die Anzeigeeinheit (102) konfiguriert ist, ein großes Bild (110) neben einer Bildsequenz (111) anzuzeigen, wobei die Bildsequenz (111) eine Mehrzahl von kleinen Bildern (110) umfasst, wobei jedes der kleinen Bilder (110) kleiner als das große Bild (110) ist, und/oder wobei die Anzeigeeinheit (102) konfiguriert ist, um Bilder (110) anzuzeigen, die eine Werbung, einen Film, mit oder ohne eine Werbung eingebettet in dem Film, ein Video, mit oder ohne eine Werbung eingebettet in dem Video, ein Sportprogramm, mit oder ohne eine Werbung eingebettet in dem Sportprogramm, ein Spielprogramm, mit oder ohne eine Werbung eingebettet in dem Spielprogramm, eine Fernsehsendung, mit oder ohne eine Werbung eingebettet in dem Fernsehprogramm, eine Nachricht, mit oder ohne eine Werbung eingebettet in der Nachricht, eine Internet-Seite, mit oder ohne eine Werbung eingebettet in der Internet-Seite, und/oder andere Bildinformationen, mit oder ohne eine Werbung eingebettet in den anderen Bildinformationen umfassen, und/oder
wobei die Anzeigeeinheit (102) einen Bildschirm umfasst.

3. Vorrichtung (100) nach einem der vorstehenden Ansprüche,
wobei die Aufnahmeeinheit (104) auf eine Umgebung vor der Anzeigeeinheit (102) ausrichtbar ist, und/oder
wobei die Aufnahmeeinheit (104) zumindest eine Kamera (114) umfasst, insbesondere zwei Kameras (114), bevorzugt drei Kameras (114) oder mehr als drei Kameras (114), und/oder
wobei die Aufnahmeeinheit (104) an einem Rand der Anzeigeeinheit (102) angeordnet ist.

4. Vorrichtung (100) nach einem der vorstehenden Ansprüche,
wobei die Bildverarbeitungseinheit (108) konfiguriert ist, das zumindest eine Merkmal mittels einer Daten-Extraktionstechnik zu bestimmen und/oder mittels einer Hash-Funktion zu verschlüsseln.

5. Vorrichtung (100) nach einem der vorstehenden Ansprüche,
wobei die Bildverarbeitungseinheit (108) konfiguriert ist, basierend auf den Daten zumindest einen Teil einer Person (118) zu erkennen,
wobei der zumindest eine Teil der Person (118) insbesondere einen Kopf (126) der Person (118) und/oder zumindest ein Auge (128) der Person (118) und/oder zumindest eine Hand (132) der Person (118) umfasst, wobei die Bildverarbeitungseinheit (108) insbesondere konfiguriert ist, das zumindest eine Merkmal als eine Orientierung des Kopfs (126) auf eines der zumindest zwei Bilder (110), als eine Orientierung des zumindest einen Auges (128) auf eines der zumindest zwei Bilder (110), als eine Bewegung der zumindest einen Hand (132) auf eines der zumindest zwei Bilder (110), als ein Nicken des Kopfes (126) zu einem der zumindest zwei Bilder (110), als ein Schütteln des Kopfs (126) zu einem der zumindest zwei Bilder (110), und/oder als ein Zudrücken des zumindest einen Auges (128) zu einem der zumindest zwei Bilder (110) zu bestimmen.

6. Vorrichtung (100) nach Anspruch 5,
wobei die Bildverarbeitungseinheit (108) konfiguriert ist, das zumindest eine Merkmal als eine zeitliche Reihenfolge der ausgewählten Bilder (110), als eine zeitliche Bewegung des zumindest einen Teils der Person (118), und/oder als zusätzliche Objekte in dem Blickfeld (106) der Aufnahmeeinheit (104) zu bestimmen, und/oder
wobei die Bildverarbeitungseinheit (108) konfiguriert ist, eine Zuordnung der Person (118) zu der Anzeigeeinheit (102) zu bestimmen,
wobei die Bildverarbeitungseinheit (108) insbesondere konfiguriert ist, die Zuordnung der Person (118) zu der Anzeigeeinheit (102) mittels eines QR-Codes zu bestimmen, und/oder
wobei der Controller (112) konfiguriert ist, zu bestimmen, ob das zumindest eine Merkmal der Person (118) und eine Sequenz von ausgewählten Bildern (110) basierend auf dem zumindest einen Merkmal der Person (118), mit zumindest einem Merkmal einer anderen Person (118) und/oder mit einer Sequenz von ausgewählten Bildern (110) basierend auf dem zumindest einen Merkmal der anderen Person (118) übereinstimmt,
wobei der Controller (112) insbesondere konfiguriert ist, der Person (118) ähnliche Bilder (110) oder gleiche Bilder (110) auf der Anzeigeeinheit (102) anzuzeigen, wie der anderen Person (118).

7. Vorrichtung (100) nach einem der vorstehenden Ansprüche,
wobei der Controller (112) konfiguriert ist, das ausgewählte Bild (110) zu markieren und/oder die Anzeigeeinheit (102) konfiguriert ist, eine Markierung (120) um das ausgewählte Bild (110) anzuzeigen, und/oder wobei der Controller (112) konfiguriert ist, das ausgewählte Bild (110) zu vergrößern und die Anzeigeeinheit (102) konfiguriert ist, das vergrößerte Bild (110) anzuzeigen, und/oder
wobei der Controller (112) konfiguriert ist, das ausgewählte Bild (110) zu verkleinern und die Anzeigeeinheit (102) konfiguriert ist, das verkleinerte Bild (110) anzuzeigen, und/oder
wobei der Controller (112) drahtlos oder drahtgebunden mit der Anzeigeeinheit (102), der Aufnahmeeinheit (104) und der Bildverarbeitungseinheit (108) verbunden ist, und/oder
wobei der Controller (112) konfiguriert ist, das zumindest eine Merkmal zu verschlüsseln, und/oder
wobei der Controller (112) konfiguriert ist, das zumindest eine Merkmal verschlüsselt zu speichern.

8. Vorrichtung (100) nach einem der vorstehenden Ansprüche, ferner umfassend:
einen internen Speicher (202); und/oder
einen externen Speicher (204),
wobei der Controller (112) konfiguriert ist, das zumindest eine Merkmal in dem internen Speicher (202) und/oder in dem externen Speicher (204) zu speichern, und/oder
wobei der Controller (112) drahtlos oder drahtgebunden mit dem interner Speicher (202) und/oder mit dem externen Speicher (204) verbunden ist, und/oder
wobei der Controller (112) konfiguriert ist, das zumindest eine Merkmal von dem internen Speicher (202) und/oder von dem externer Speicher (204) mittels einer Datenverbindung abzurufen, wobei die Datenverbindung insbesondere eine Funkverbindung, insbesondere eine Mobilfunkverbindung oder eine Kabelverbindung ist, und/oder
wobei der externe Speicher (204) ein Server (206) oder ein Cloud-Server ist.

9. Vorrichtung (100) nach einem der vorstehenden Ansprüche, ferner umfassend:
eine Leuchteinheit (122), konfiguriert, um einen Status anzuzeigen, wobei die Leuchteinheit (122) insbesondere als Lichtstreifen ausgebildet ist, und/oder
wobei die Leuchteinheit (122) ausgebildet ist elektromagnetische Strahlung mit unterschiedlicher Wellenlänge zu emittieren, und/oder wobei die Leuchteinheit (122) an einem oberen Rand und/oder einem unteren Rand der der Vorrichtung (100), insbesondere an einer Ladesäule angeordnet ist, und/oder
wobei die Leuchteinheit (122) zumindest abschnittsweise umlaufend an einer Ladesäule (124) angeordnet ist.

10. Verfahren zur Auswahl eines Bildes (110), umfassend:
Anzeigen von zumindest zwei Bilder (110) auf einer Anzeigeeinheit (102);
Erfassen von Daten in einem Blickfeld (106) einer Aufnahmeeinheit (104), insbesondere vor der Anzeigeeinheit (102);
Bestimmen von zumindest einem Merkmal basierend auf Veränderungen der Daten in dem Blickfeld (106) der Aufnahmeeinheit (104); und
Auswählen eines auf der Anzeigeeinheit (102) angezeigten Bildes (110) basierend auf dem zumindest einen Merkmal.

11. Verfahren nach Anspruch 10, ferner umfassend
Erkennen von zumindest einem Teil einer Person (118) basierend auf den Daten,
wobei der zumindest eine Teil der Person (118) insbesondere einen Kopf (126) der Person (118) und/oder zumindest ein Auge (128) der Person (118) und/oder zumindest eine Hand (132) der Person (118) umfasst.

12. Verfahren nach Anspruch 11,
wobei das zumindest eine Merkmal eine Orientierung des Kopfs (126) auf eines der zumindest zwei Bilder (110), eine Orientierung des zumindest einen Auges (128) auf eines der zumindest zwei Bilder (110), eine Bewegung der zumindest einen Hand (132) auf eines der zumindest zwei Bilder (110), ein Nicken des Kopfes (126) zu einem der zumindest zwei Bilder (110), ein Schütteln des Kopfs (126) zu einem der zumindest zwei Bilder (110), und/oder ein Zudrücken des zumindest einen Auges (128) zu einem der zumindest zwei Bilder (110) umfasst, und/oder
wobei das zumindest eine Merkmal eine zeitliche Reihenfolge der ausgewählten Bilder (110), eine zeitliche Bewegung des zumindest einen Teils der Person (118), und/oder zusätzliche Objekte in dem Blickfeld (106) der Aufnahmeeinheit (104) umfasst.

13. Netzwerk mit mehreren Vorrichtungen (100) nach einem der vorstehenden Ansprüche,
wobei die Vorrichtungen (100) an verschiedenen Standorten angeordnet sind und mit einem Server (206) oder Cloud-Server verbunden sind.

14. Nichtflüchtiger Datenspeicher (208), konfiguriert um Anweisungen des Controllers (112) zu speichern für eine Steuerung der Vorrichtung (100) zur Auswahl eines Bildes (110) nach einem der Ansprüche 1 bis 12.

15. Computersystem (200), umfassend:
einen nichtflüchtigen Datenspeicher (208) nach Anspruch 14, und
die Vorrichtung (100) zur Auswahl eines Bildes (110) nach einem der Ansprüche 1 bis 9.
